# EUROPÄISCHE PATENTSCHRIFT

(11) **EP 1 915 886 B1**
(45) Veröffentlichungstag und Bekanntmachung des Hinweises auf die Patenterteilung: **14.03.2018**
(21) Anmeldenummer: 06792810.1
(22) Anmeldetag: 14.08.2006
(51) Int. Cl.: H04Q 11/04, H04L 12/28

(54) **VERFAHREN, KOMMUNIKATIONSANORDNUNG UND KOMMUNIKATIONSEINRICHTUNG ZUM ÜBERMITTELN VON INFORMATIONEN**
METHOD, COMMUNICATION ARRANGEMENT AND COMMUNICATION DEVICE FOR TRANSFERRING INFORMATION
PROCEDE, DISPOSITIF DE COMMUNICATION ET SYSTEME DE COMMUNICATION PERMETTANT DE TRANSMETTRE DES INFORMATIONS

(30) Priorität: 16.08.2005 DE 102005038690
(43) Veröffentlichungstag der Anmeldung: 30.04.2008
(73) Patentinhaber: Siemens Aktiengesellschaft, 80333 München (DE)
(72) Erfinder: GEMMER, Thomas, 81735 München (DE); TREYER, Thomas, 81379 München (DE)
(86) Internationale Anmeldenummer: PCT/EP2006/065283
(87) Internationale Veröffentlichungsnummer: WO 2007/020253

(56) Entgegenhaltungen:
- EP-A1- 1 492 381
- US-A1- 2003 053 458
- US-B1- 6 654 371
- "DELIVERING MULTICAST VIDEO OVER ASYMMETRIC DIGITAL SUBSCRIBER LINE" CISCO WHITE PAPER, 1999, Seiten 1-14, XP002259717

## Beschreibung

In aktuellen Teilnehmeranschlussnetzen -auch als Access-Networks bezeichnet - findet der z. B. gemäß einem xDSL-Übertragungsverfahren ausgestaltete und hohe Übertragungsraten bereitstellende Teilnehmeranschluss zunehmende Verbreitung. Durch den beispielsweise dadurch ermöglichten breitbandigen Internet-Zugang wird die Anzahl der durch diese Teilnehmeranschlussnetze bereitgestellten Anwendungen bzw. Applikationen zunehmend vergrößert. Eine dieser Applikationen ist die Übertragung von Informationen multimedialer Inhalte - auch als breitbandige Multimedia-Datenströme bezeichnet - wie etwa Videos bzw. Videostreams. Mit Hilfe dieser Applikationen können Breitband-Verteildienste, insbesondere Multimedia-Verteildienste (z. B. Radio und Fernsehen) sowie Abrufdienste wie beispielsweise "Video-on-Demand" oder breitbandige Internet-Kommunikation (z. B. Videokonferenz) realisiert werden.

Für die Übermittlung breitbandiger Multimedia-Datenströme über Kommunikationsnetze werden zunehmend Rundesende-Übertragungsverfahren wie z.B. "Multicast" bzw. "Multicasting" eingesetzt. Multicast - in gemäß dem Internetprotokoll bzw. IP ausgestalteten Kommunikationsnetzen auch als "IP-Multicast" bezeichnet - ermöglicht es, mehrere Empfänger über das Internet oder ein anders Kommunikationsnetz gleichzeitig mit Multimedia-Daten ggf. auch in Echtzeit zu versorgen, ohne Server, Router oder das Netz zu stark zu belasten. Im Rahmen von Multicast kann die Anzahl der Empfänger beliebig groß sein, welche auch dem Sender nicht bekannt sein muss. Alle zu einer Gruppe von Interessenten gehörenden Empfänger sind unter einer Gruppen-Adresse zusammengefasst. An diese Adresse verschickt der Sender seine Daten nur einmal. Für die Empfänger werden die Daten erst von denjenigen Routern vervielfältigt, bei denen sich die Netzstruktur verzweigt. Dadurch wird das zu übertragende Datenvolumen geringer gehalten, weil keine unnötigen Pakete verschickt werden. Zudem wird das Netz entlastet und die Leistungsfähigkeit von Servern und Routern verbessert. Besonders bei Übertragungsdiensten wie Multimedia-Streaming ist das IP-Multicast wirtschaftlich.

Die Verwaltung der Gruppen-Mitgliedschaften erfolgt in IP-Netzen im Rahmen des Internet-Group-Management-Protokolls bzw. IGMP. Mit dem Internet-Group-Management-Protokoll teilen IP-Hosts ihre Multicast-Mitgliedschaften an benachbarte Multicast-Router mit. Ein Router kann in diesem Zusammenhang auch als Host auftreten, wobei dann die Gruppenmitgliedschaften der angeschlossenen Hosts zusammengefasst und vom Router einem übergeordneten Netz als eine einzige Gruppenmitgliedschaft gemeldet werden. IGMP wird als Bestandteil des Internet-Protokolls angesehen, denn auch hier wird ein normales IP-Paket generiert, das in seinem Informationsfeld IGMPspezifische Informationen (Protkollelemente) enthält.

Im Teilnehmerzugangsnetz ist das Ethernet-Übertragungsverfahren weit verbreitet, wobei in derartigen Netzen der Zugang gewissen Randbedingungen unterworfen ist. Beispielsweise muss sich der Nutzer in einer Betriebssystemunabhängigen Art anmelden und authentisieren können; zudem ist in der Regel eine Entgelderfassung notwendig. Mit dem Point-To-Point-Protokoll (PPP) und dem zugehörigen Radius-Protokoll wurden diese Leistungsmerkmale für Einwalknoten verwirklicht. Daher lag es nahe, die dort eingeführten Prozeduren und Protokolle auf dem breitbandigen Zugang zu erweitern, was letztendlich zur Einführung von "PPP over Ethernet (PPPoE)" führte.

In aktuellen Teilnehmeranschlussnetzen sind mehrere Teilnehmer (Hosts) über beispielsweise xDSL-Modemes an eine dezentrale Kommunikationseinrichtung bzw. Multiplexereinrichtung (auch als Digital Subscriber Line Access Multiplexer, DSLAM bezeichnet) angeschlossen. In anderen Ausprägungsformen ist die Kommunikationseinrichtung beispielsweise durch ein aktives oder passives optisches Verteilnetz (AON oder PON) realisiert. Die von Teilnehmern zum DSLAM übermittelten Informationen werden über ein daran angeschlossenen Kommunikationsnetz - auch als Aggregations-Netzwerk bezeichnet - zu einen breitbandigen Network-Access-Server (NAS) bzw. Broadband Remote Access Server (BRAS) übermittelt, dem ersten Knoten, der auf IP-Ebene arbeitet und üblicherweise zusammen mit einem Management-Server (Radius-Server) Aufgaben der Authentisierung, Entgelderfassung usw. erledigt. Aktuelle gemäß der xDSL-Übertragungstechnologie ausgestaltete Teilnehmerzugangsnetze arbeiten mit ATM (Asynchroner Transfer Modus) als Schicht-2-Protokoll. Zukünftige wird jedoch auch hier verstärkt direkt Ethernet-Übertragungstechnologie als Schicht 2 Technik eingesetzt. Der Network-Access-Server ist meist ebenfalls in das ATM- oder Ethernet-Kommunikationsnetz eingebunden. Eine im NAS angeordnete Anpassungsschicht bzw. PPPoE-Protokollschicht sorgt dafür, dass PPP über Ethernet übertragen werden kann.

PPPoE ist neben PPPoA quasi ein De-Fakto-Standard für breitbandigen Internetzugang. Die Anforderung zum Aufbau einer Verbindung zum Internet - d.h. Initialisierung einer PPPoE-Session - erfolgt durch den Teilnehmer (PPPoE), wobei die Anforderung durch einen Broadband Remote Access Server (BRAS) in der Rolle als PPPoE-Server bearbeitet wird. Pro Teilnehmer ist eine PPPoE-Session erforderlich, wobei ein einzelner BRAS bis zu 50.000 Sessions bzw. Kommunikationsbeziehungen verarbeiten kann. PPPoE ist jedoch nur für Punkt-zu-Punkt-Beziehungen geeignet. Dies war in den meisten Anwendungsfällen ausreichend, da aktuelle Zugänge zum Internet meistens auf Unicast-Datenverkehr basieren. Für neuartige Dienste wie Internet-TV bzw. Broadcast over DSL stellt sich diese Punkt-zu-Punkt-Topologie als Nachteil heraus. Dies soll an einem Beispiel verdeutlicht werden: In einem Teilnehmerzugangsnetz werden 100 TV-Kanäle den Teilnehmern zur Auswahl angeboten, wobei für jeden TV-Kanal ist eine Bandbreite von 2 Megabit pro Sekunde erforderlich ist. Ein einzelner BRAS kann ungefähr 50.000 Teilnehmer verarbeiten, d. h. bei maximaler Auslastung müssen 50.000 PPPoE-Verbindungen bzw. Sessions gleichzeitig bearbeitet werden. Wenn jeder Teilnehmer einen bestimmten TV-Kanal anfordert, müssen durch den BRAS 50.000 TV-Kanäle in 50.000 PPPoE-Verbindungen eingefügt werden. Dies erfordert einen Bandbreitenbedarf von ungefähr 100 Gigabit pro Sekunde. Da PPPoE auf einer Punkt-zu-Punkt-Verbindung basiert, kann ein BRAS nicht davon profitieren, dass lediglich 100 unterschiedliche TV-Kanäle, d. h. 100 unterschiedliche Arten von Informationen verarbeitet werden müssen. Dies bedeutet im schlimmsten Fall, bei dem alle Teilnehmer den ein-und denselben TV-Kanal anfordern, dass durch den BRAS trotzdem 50.000-mal dieser eine angeforderten TV-Kanal in die 50.000 PPoE-Sessions einfügt werden muss. Die Folge ist nicht nur eine enorme Bandbreitenverschwendung seitens des BRAS, sondern auch eine Bandbreitenverschwendung hinsichtlich der zur Verfügung stehenden Netzwerkressourcen im Aggregationsnetzwerk zwischen BRAS und dem jeweiligen DSLAM.

Zur Umgehung der oben genannten Probleme kann als erste Maßnahme die Kapazität des BRAS als auch des Teilnehmerzugangsnetz derart ausgebaut werden, dass die komplette Multicast-Verteilung über dem BRAS gesteuert werden kann. Diese Lösung ist jedoch mit einem hohen technischen und somit auch wirtschaftlichen Aufwand verbunden.

Eine zweite Lösung wäre die Verlagerung des Multicast-Verteilpunktes von der jeweiligen Videoquelle (z.B. Video-Server oder Headend) zum jeweiligen DSLAM. Eine Folge davon wäre, dass im DSLAM neben der bereits existierenden PPPoE Session zwischen Teilnehmer und BRAS eine weitere Verbindung zur Übermittlung des Multicast-Datenverkehrs über die einzelne Teilnehmeranschlussleitung eingerichtet sein muss. Hier tritt jedoch das Problem auf, dass die meisten auf der Teilnehmerseite angeordneten Kommunikationseinrichtungen (Personalcomputer, Router, Set-Top-Box) keine Vielzahl paralleler Verbindungen bzw. Sessions verarbeiten können. So erfordern z.B. zwei gleichzeitig geführte Sessions zwei unterschiedliche IP-Adressen - sowohl die aktuellen teilnehmerseitigen Kommunikationseinrichtungen bzw. CPEs (Customer Promises Equipment) als auch DSL-Router sind jedoch nicht dafür ausgestaltet mit mehreren gleichrangigen IP-Adressen zu arbeiten.

Es gäbe die theoretische Möglichkeit die PPPoE-Session in der teilnehmerseitigen Kommunikationseinrichtung (beispielsweise einem NAT-Router, Network-Adress-Translation) zu terminieren sowie die Multicast-Session in einer an den NAT-Router angeschlossenen TV-Set-Top-Box abzuschließen bzw. zu terminieren. Dies würde jedoch erforderlich machen, dass der NAT-Router die Multicast-Session bis zur TV-Set-Top-Box "durchtunnelt", was jedoch mit einem höheren technischen Aufwand verbunden ist. Der 2-Session-Ansatz hat somit mehrere Nachteile:
- die teilnehmerseitige Kommunikationseinrichtung muss mit "Tunneleigenschaften" ausgestattet sein,
- separate Verkabelung zwischen der teilnehmerseitigen Kommunikationseinrichtung und z.B. der Set-Top-Box ist erforderlich,
- der Anschluss weiterer Set-Top-Boxen ist sehr umständlich,
- die Set-Top-Box kann nicht als Internetzugang für internetkonforme Applikationen wie beispielsweise EPG (Electronic Program Guide) oder IP-Telefonie (VoIP) genutzt werden,
- ein Personalcomputer bzw. Laptop kann nicht zur Nutzung von TV-Kanälen genutzt werden,
- mindestens zwei öffentliche IP-Adressen sind für jeden Haushalt erforderlich.

In der europäischen Offenlegungsschrift EP 1 492 381 A1 wird ein DSL Access Netzwerk mit verbesserter Authentifikation, Authorisierung, Rechnungsführung und Konfigurationssteuerung für Multicast Services beschrieben.

In der amerikanischen Offenlegungsschrift US 2003/0053458 A1 wird eine XDSL Vorrichtung, Multicast Verteilungssystem und Datenverteilungsverfahren beschrieben.

Der Erfindung liegt somit die Aufgabe zugrunde, die Übertragung von Informationen über Teilnehmerzugangsnetze weiter zu zu optimieren. Die Aufgabe wird durch ein Verfahren, eine

Kommunikationsanordnung sowie eine Kommunikationseinrichtung gemäß den Merkmalen der Patentansprüche 1 und 5 gelöst.

Beim erfindungsgemäßen Verfahren zum Übermitteln von Informationen von und/oder zu einer teilnehmerseitigen Kommunikationseinrichtung ist zumindest eine erste Kommunikationsbeziehung zwischen der teilnehmerseitigen Kommunikationseinrichtung und einer zumindest einem Kommunikationsnetz zugeordneten dezentralen Kommunikationseinrichtung eingerichtet. Des Weiteren ist zumindest eine weitere Kommunikationsbeziehung zwischen der dezentralen Kommunikationseinrichtung und einer den Anschluss an ein übergeordnetes Kommunikationsnetz realisierenden Netzzugangseinrichtung eingerichtet, wobei über die zumindest eine erste und die zumindest eine weitere Kommunikationsbeziehung erste Informationen zwischen der teilnehmerseitigen Kommunikationseinrichtung und dem übergeordneten Kommunikationsnetz austauschbar sind. Über das zumindest eine Kommunikationsnetz an die dezentrale Kommunikationseinrichtung übermittelte weitere Informationen werden zusätzlich zu den ersten Informationen über die zumindest eine erste Kommunikationsbeziehung an die teilnehmerseitige Kommunikationseinrichtung übermittelt.

Der wesentliche Vorteil des erfindungsgemäßen Verfahrens besteht darin, dass unterschiedliche Arten von Datenverkehr wie beispielsweise Multicast-Datenverkehr und bidirektionaler PPPoE-Datenverkehr (wie beispielsweise Internet-Datenverkehr) über ein und dieselbe Kommunikationsbeziehung bzw. Session zwischen dezentraler Kommunikationseinrichtung und Teilnehmer übermittelbar sind. Somit können handelsübliche auf die Verarbeitung einer Session ausgelegte, teilnehmerseitige Kommunikationseinrichtungen wie beispielsweise aktuell käufliche Router weiterhin für die Nutzung aktueller und zukünftig noch einzuführender Informationsdienste genutzt werden.

Weitere vorteilhafte Ausgestaltungen des erfindungsgemäßen Verfahrens sowie eine Kommunikationsanordnung zur Durchführung des erfindungsgemäßen Verfahrens sind den weiteren Ansprüchen zu entnehmen.

Im Folgenden wird das erfindungsgemäße Verfahren anhand mehrerer Zeichnungen näher erläutert. Dabei zeigen
- FIG 1: beispielhafte Anwendungsszenarien zur Durchführung des erfindungsgemäßen Verfahrens
- FIG 2: eine Anordnung der für die Durchführung des erfindungsgemäßen Verfahrens erforderlichen Protokollschichten (Protokollstack) gemäß einer ersten Ausgestaltungsvariante
- FIG 3: der für die Durchführung des erfindungsgemäßen Verfahrens erforderliche Protokollstack gemäß einer weiteren Ausgestaltungesvariante.
- FIG 4: in einer schematischen Darstellung die Einbettung von IGMP-Protokollelementen in PPPoE-Datenrahmen.

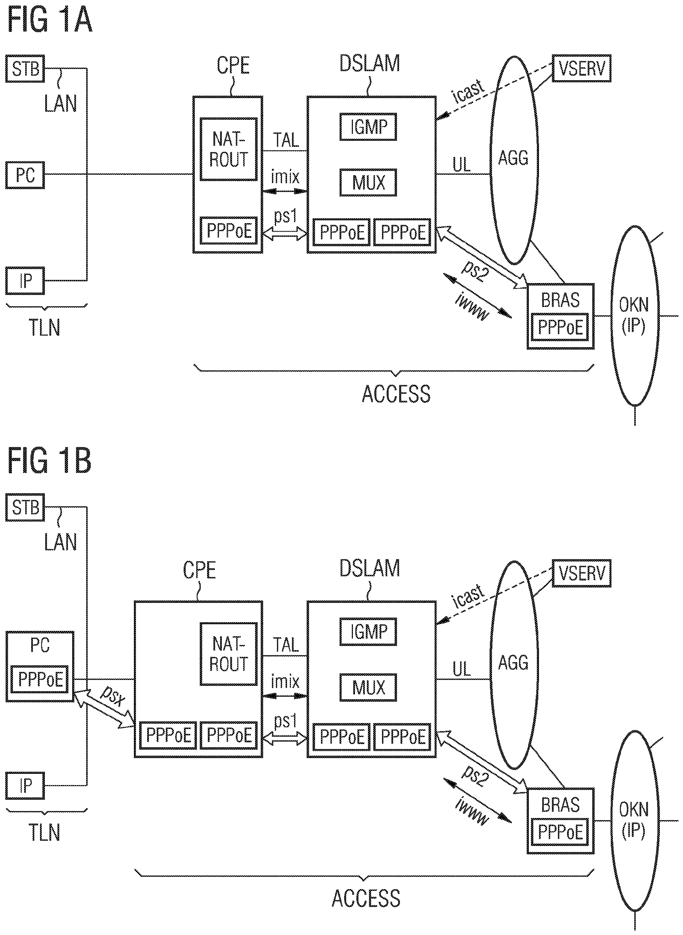

FIG 1 zeigt in einem Blockschaltbild eine in einem Teilnehmerzugangsnetz ACCESS angeordnete dezentrale Kommunikationseinrichtung - im Folgenden auch als DSLAM bezeichnet, Digital Subscriber Line Access Multiplexer - an welchen über eine Teilnehmeranschlussleitung TAL eine teilnehmerseitige Kommunikationseinrichtung CPE angeschlossen ist. In FIG 1 ist nur eine über eine Teilnehmeranschlussleitung TAL angeschlossene teilnehmerseitige Kommunikationseinrichtung CPE stellvertretend für viele dargestellt. Die teilnehmerseitige Kommunikationseinrichtung CPE ist in diesem Ausführungsbeispiel als xDSL-Modem mit zugeordneter NAT-Router-Funktionalität NAT-ROUT ausgestaltet. An das xDSL-Modem CPE ist ein lokales Kommunikationsnetz LAN angeschlossen, über welches mehrere Kommunikationsendgeräte wie beispielsweise eine Set-Top-Box STB ein Personalcomputer PC sowie ein Internet-konformes Telefon IP mit dem xDSL-Modem verbunden sind. Der DSLAM ist über einen Uplink UL und einem Aggregationsnetzwerk AGG sowohl mit einem im Teilnehmerzugangsnetz ACCESS angeordneten Video-Server VSERV sowie mit einer ebenfalls im Teilnehmerzugangs Access angeordneten Netzzugangseinrichtung bzw. BRAS verbunden. Durch den BRAS wird der Zugang zu einem übergeordneten Kommunikationsnetz wie z.B. Internet für die jeweiligen teilnehmerseitigen Kommunikationsendgeräte STB, PC, IP bereitgestellt.

Erfindungsgemäß befinden sich im DSLAM mehrere Protokollinstanzen PPPoE zur Terminierung des PPP- bzw. PPPoE-Protokolls bzw. -Sessions. Im Rahmen des erfindungsgemäßen Verfahrens ist eine erste PPPoE-Session ps1 zwischen der dezentralen Kommunikationseinrichtung DSLAM und der teilnehmerseitigen Kommunikationseinrichtung CPE eingerichtet. Des Weiteren ist eine zweite PPoE-Session ps2 zwischen der dezentralen Kommunikationseinrichtung DSLAM und dem BRAS eingerichtet. Im Rahmen des erfindungsgemäßen Verfahrens übernimmt die dezentrale Kommunikationseinrichtung DSLAM die Rolle eines "Man-in-the-Middle", welche für den Teilnehmer als auch für den den jeweiligen BRAS betreibenden Internet-Service-Provider unsichtbar bleibt. Vorteilhaft sind in der dezentralen Kommunikationseinrichtung DSLAM die beiden PPPoE-Sessions ps1,2 so verknüpft, dass Datenpakete (z.B. Network Control Protocol bzw. NCP Datenpakete) in der Art und Weise von einer Session zur anderen transparent durchgereicht werden, dass nur eine durchgehende Session an den äußeren Endpunkten der Einzelsessions ps1,2 nach außen sichtbar ist. Dies hat die Wirkung, dass, wenn die erste PPPoE Session ps1 abgebaut wird, automatisch auch die zweite PPPoE-Session ps2 abgebaut wird.

Die transparente Verknüpfung ist derart ausgestaltet, dass beispielsweise bei einem durch den Teilnehmer initiierten Aufbau einer PPPoE-Session in Richtung BRAS die erste PPPoE-Session ps1 zwischen Teilnehmer bzw. CPE und der dezentralen Kommunikationseinrichtung DSLAM eingerichtet und die über diese erste PPPoE-Session übermittelten Passwort und Account-Informationen durch die dezentrale Kommunikationseinrichtung DSLAM abgefangen wird. Die Passwort und Account-Informationen werden von der dezentrale Kommunikationseinrichtung DSLAM für den Aufbau der zweiten PPPoE-Session ps2 zum jeweiligen BRAS weiterverwendet.

Da die von der dezentralen Kommunikationseinrichtung DSLAM ausgeführte Funktionalität des "Man-in-the-middle" nach Außen hin transparent ist, können handelsübliche Kommunikationseinrichtungen wie Modems, Router und BRAS-Server weiterhin genutzt werden.

Für die weiteren Ausführungen sei angenommen, dass der Teilnehmer sowohl eine Verbindung zum Internet aufgebaut hat (Surfen im Internet mittels PC) als auch bestimmte Multimedia-Informationen mittlels Set-Top-Box STP angefordert hat.

Im Rahmen aktueller Multimediadienste wie beispielsweise IP-TV oder Video-on-Demand werden vom Video-Server VSERV entsprechende Multimedia-Informationen icast wie z. B. MPEG-Datenströme mittels Broadcast bzw. Multicast über das dem Teilnehmerzugangsnetz Access zugeordnete Aggregationsnetzwerk AGG zur dezentralen Kommunikationseinrichtung DSLAM übermittelt. Zusätzlich werden über den BRAS und über die zweite PPPoE-Session ps2 bidirektionaler Internet-Datenverkehr iwww zur dezentralen Kommunikationseinrichtung DKE übermittelt. Durch einen in der dezentralen Kommunikationseinrichtung DSLAM angeordneten Multiplexer MUX werden die jeweils für einen Teilnehmer relevanten Informationen icast, iwww selektiert, gemultiplext und der gemultiplexte Datenstrom imux über die erste PPPoE-Session ps1 zum Teilnehmer TLN übermittelt. Der so an die teilnehmerseitige Kommunikationseinrichtung CPE des Teilnehmers TLN übermittelte, gemultiplexte Datenstrom imix wird durch die in der teilnehmerseitigen Kommunikationseinrichtung CPE angeordnete NAT-Router-Funktionalität NAT-ROUT an die jeweils angeschlossenen Endgeräte STP, PC, IP über das LAN weitergeleitet.

Das erfindungsgemäße Zusammenfassen bzw. Multiplexen von Internet-Datenverkehr iwww und Multicast-Datenströmen icast in der dezentralen Kommunikationseinrichtung DSLAM und Übermittlung dieses zusammengeführten Datenstromes imix über die PPPoE-Session ps1 zum Teilnehmer ermöglicht eine einfache und somit vorteilhafte Anordnungsstruktur des im Teilnehmerbereich angeordneten Heim-Netzwerkes bzw. LAN. Durch das Übermitteln aller angeforderten Informationen icast, iwww über diese eine PPPoE-Session ps1 sind alle in der Beschreibungseinleitung genannten Probleme des "2-Session-Approach" gelöst bzw. beseitigt. So können beispielsweise angeforderte TV-Kanäle sowohl an dem an die Set-Top-Box angeschlossenen Fernseher als auch durch über das LAN an die teilnehmerseitige Kommunikationseinrichtung CPE angeschlossene Personalcomputer bzw. Laptops beobachtet werden. Für das Heim-Netzwerk LAN ist nur noch die Verwendung einer öffentlichen IP-Adresse erforderlich. Diese wird im Rahmen der üblichen Prozeduren beim Einrichten der PPPoE-Verbindungen ps1,2 zwischen CPE und BRAS zugeteilt - beispielsweise im Rahmen des IPCP-Protokolls, welches als Network Control Protocol (NCP) für IP eingeführt wurde. Durch die vorteilhafte Verwendung eines NAT-Routers kann das Heim-Netzwerk LAN gemäß IP-Vorgaben als privates Netzwerk deklariert werden, wobei durch die NAT-Router-Funktionalität in der dezentralen Kommunikationseinrichtung CPE die Übersetzung in die jeweils aktuell zugeteilte öffentliche IP-Adresse sichergestellt wird.

Es sei angemerkt, dass die zwischen dem Teilnehmer und der dezentralen Kommunikationseinrichtung DSLAM im Rahmen des erfindungsgemäßen Verfahrens einzurichtende erste PPPoE-Session ps1 nicht in der dezentralen Kommunikationseinrichtung CPE terminiert sein muss - wie in FIG 1 dargestellt. Alternativ kann die erste PPPoE-Session ps1 auch in einem der über das LAN angeschlossenen Kommunikationsendgeräte STP, PC, IP terminiert werden - nicht dargestellt. In diesem Fall ist jedoch der über die erste PPPoE-Session übermittelte Datenstrom imix nur durch dieses terminierende Kommunikationsendgerät STP, PC, IP nutzbar.

Dieser Nachteil könnte dadurch umgangen werden, dass in der teilnehmerseitigen Kommunikationseinrichtung CPE ebenfalls eine weitere Protokollinstanz PPPoE zur Terminierung des PPP-oder PPPoE-Protokolls bzw. -Session angeordnet ist. Mit dieser weiteren Protokollinstanz PPPoE wird eine zusätzliche PPPoE-Session psx zwischen der teilnehmerseitigen Kommunikationseinrichtung CPE und dem Kommunikationsendgerät, wie beispielsweise dem Personalcomputer PC eingerichtet - siehe FIG 1B. Im Rahmen des erfindungsgemäßen Verfahrens wird durch die teilnehmerseitige Kommunikationseinrichtung CPE ebenfalls die Rolle eines "Man-in-the-Midddle" ausgeführt, wodurch es möglich ist, dass andere im LAN angeordnete Kommunikationsendgeräte die zusätzliche PPPoE-Session psx mitbenutzen können, d.h. über die im CPE angeordnete zu den angeschlossenen Kommunikationsendgeräten hin terminierende PPPoE-Instanz können Informationen von/zu den weiteren Kommunikatinsendgeräten - hier Set-Top-Box STP und IP-Phone IP - übermittelt werden, ohne dass dies für den die zusätzliche PPPoE-Session psx terminierenden Personalcomputer sichtbar ist.

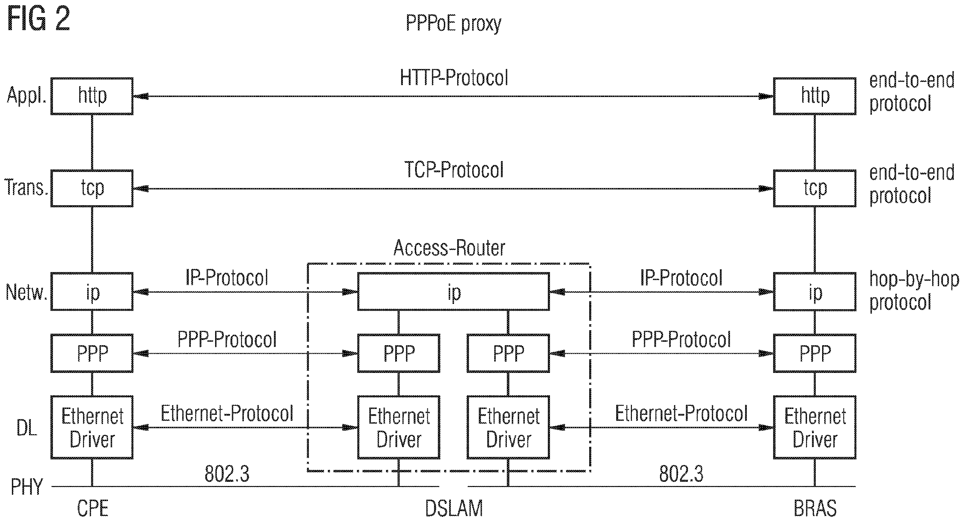

Wie bereits erläutert sind im Rahmen des erfindungsgemäßen Verfahrens in der dezentralen Kommunikationseinrichtung DSLAM zwei Protokollinstanzen zur Terminierung des PPPoE-Protokolls vorgesehen. Die dezentrale Kommunikationseinrichtung DSLAM kann dabei sowohl für die Ausführung der Funktion eines PPPoE-Relay als auch der Funktion eines PPPoE-Proxy konfiguriert sein. In FIG 2 ist die für die Funktionalität als PPPoE-Proxy erforderliche Protokoll-Schichtenstruktur dargestellt. In der Funktionalität als PPPoE-Proxy werden wie aus FIG 2 ersichtlich, bei an der dezentralen Kommunikationseinrichtung DSLAM eingehenden PPPoE-Datenpaketen die jeweiligen PPP- als auch Ethernet-Datenrahmen entfernt und pure IP-Datenpakete durch die dezentrale Kommunikationseinrichtung DSLAM verarbeitet, welche anschließend wieder in PPPoE-Datenrahmen eingefügt werden. Dadurch wird eine einfache Bearbeitung der IP-Datenpakete ermöglicht, insbesondere ist eine genauere Analyse der in den IP-Datenpaketen enthaltenen Informationen wie beispielsweise die Auswertung von IGMP-Datenpaketen bzw. IGMP-Informationen möglich.

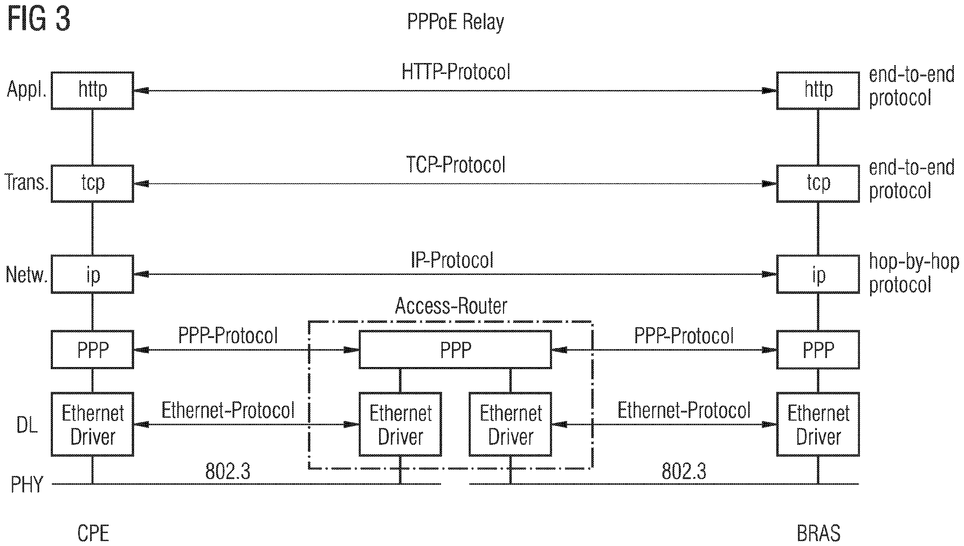

In FIG 3 ist die für die Funktionalität als PPoE-Relay erforderliche Protokoll-Schichtenstruktur dargestellt. Im Rahmen dieser Funktionalität als PPPoE-Relay werden an der dezentralen Kommunikationseinrichtung DSLAM eingehende PPPoE-Datenpakete transparent, d. h. ohne Manipulation zwischen den einzelnen PPPoE-Protokollinstanzen PPPoE weitergeleitet.

In der Ausprägung eines PPPoE Proxys (siehe auch Figur 2) werden die PPPoE Pakete der ersten PPPoE Session ps1 vom Teilnehmer terminiert, aber dann nahezu inhaltsgleich als zweite PPPoE Sessions ps2 zwischen der dezentralen Kommunikationseinrichtung DSLAM in Richtung BRAS weitergeleitet. Dabei sind aber prinzipiell Änderungen und Manipulationen an bestimmten Teilen der Pakete der Session ps1 denkbar und möglich.

In der Ausprägung eines PPPoE Relays (siehe auch Figur 3) werden die PPPoE Pakete der Sessions ps1 unverändert und möglicherweise ohne eigentliche Kenntnis der Bedeutung als Pakete der Session ps2 weitergeleitet. Zur Einspeisung des Multicastverkehrs ist lediglich eine relativ einfache Analyse nach bestimmten Bitmustern notwendig, die den notwendigen Hinweis auf das Multicastsignalisierungsprotokoll IGMP geben.

Wie bereits erläutert wird die zwischen Teilnehmer TLN und BRAS eingerichtet PPPoE-Session in der dezentralen Kommunikationsrichtung DKE sowohl in Richtung BRAS als auch in Richtung Teilnehmer TLN terminiert. Dies bedeutet, dass auch der Ethernet-MAC-Layer (Medium Access Control) in der dezentralen Kommunikationseinrichtung DSLAM in entsprechender Weise terminiert wird. Durch die Terminierung des Ethernet-MAC-Layers kann vorteilhaft eine MAC-Adress-Translation-Funktionalität in der dezentralen Kommunikationseinrichtung DSLAM durchgeführt werden. Dieser Dienst wird auch als CEBS (Carrier Ethernet Border Switch) bezeichnet. Im Rahmen von CEBS kann eine Umwandlung bzw. Übersetzung von MAC-Adressen erfolgen. Durch die im Rahmen von CEBS ermöglichte Übersetzung der Mac-Adressen können unterschiedliche MAC-Adressen auf der Teilnehmerseite TLN und im Aggregationsnetz AGG verwendet werden, wodurch Hardwareaufwand minimiert werden kann.

Wie ebenfalls bereits ausgeführt, werden in dem Video-Server VSERV gespeicherten Multimedia-Daten mittels Broadcast- bzw. Multicast-Übertragungsverfahren an die dezentrale Kommunikationseinrichtung DSLAM übermittelt. Zur Steuerung des Broadcast- bzw. Multicast-Datenstromes icast werden beispielsweise IGMP-Datenpakete zwischen der Teilnehmerseite TLN und dem Video-Server VSERV ausgetauscht. Alternativ kann die Übermittlung der IGMP-Datenpakete auch über den BRAS zum Video-Server erfolgen. Im Rahmen des IGMP-Protokolls kann beispielsweise die teilnehmerseitige Auswahl eines bestimmten TV-Kanals gesteuert werden. Im Rahmen des erfindungsgemäßen Verfahrens ist es erforderlich, dass der in der dezentralen Kommunikationseinrichtung DSLAM angeordnete Multiplexer MUX Informationen dahingehend erhält, welche Video-Informationen durch den jeweiligen Teilnehmer angefordert worden sind. Es sind mehrere Ausgestaltungsvarianten der dezentralen Kommunikationseinrichtung DSLAM bzgl. IGMP bekannt.

Gemäß einer ersten Ausgestaltungsvariante werden die teilnehmerseitig ausgesendeten IGMP-Datenpakete transparent über die dezentrale Kommunikationseinrichtung DSLAM in Richtung BRAS bzw. Video-Server VSERV übermittelt werden. Somit ist es für den in der dezentralen Kommunikationseinrichtung DSLAM angeordnete Multiplexer MUX zunächst nicht möglich, bzw. hat dieser zunächst keine Informationen dahingehend, welche Informationen durch den jeweiligen Teilnehmer angefordert worden sind. Um der jeweilige dezentralen Kommunikationseinrichtung DSLAM bzw. dem darin angeordneten Multiplexer trotzdem Informationen dahingehend zu verschaffen, welche Multimedia-Daten vom jeweiligen Teilnehmer von dem Video-Server VSERV angefordert worden sind, ist in der dezentralen Kommunikationseinrichtung DSLAM eine Vorrichtung IGMP angeordnet durch welche mittels IGMP-Snooping transparent übermittelte IGMP-Datenpakete mitgelesen und ausgewertet werden. Durch IGMP-Snooping können IGMP-Requests abgefangen und dahingehend ausgewertet werden, welche Videoinformationen bzw. welche TV-Kanäle durch den jeweiligen Teilnehmer angefordert werden. In Abhängigkeit von diesen Informationen werden durch den in der dezentralen Kommunikationseinrichtung BKE angeordneten Multiplexer die jeweils angeforderten und an die dezentrale Kommunikationseinrichtung DSLAM mittels Broadcast bzw. Multicast übermittelten Multimedia-Daten icast entsprechend selektiert, über die zwischen teilnehmerseitiger Kommunikationseinrichtung CPE und dezentraler Kommunikationseinrichtung DSLAM angeordneter PPPoE-Session ps1 eingefügt und an den jeweiligen Teilnehmer weiter übermittelt.

Gemäß einer alternativen Ausgestaltungsvariante wird das IGMP-Protokoll in der dezentralen Kommunikationseinrichtung DSLAM terminiert, wodurch der in der dezentralen Kommunikationseinrichtung DSLAM angeordnete Multiplexer MUX die erforderlichen Informationen für das Selektieren angeforderter Videoinformationen ohne weiteren Aufwand erhält.

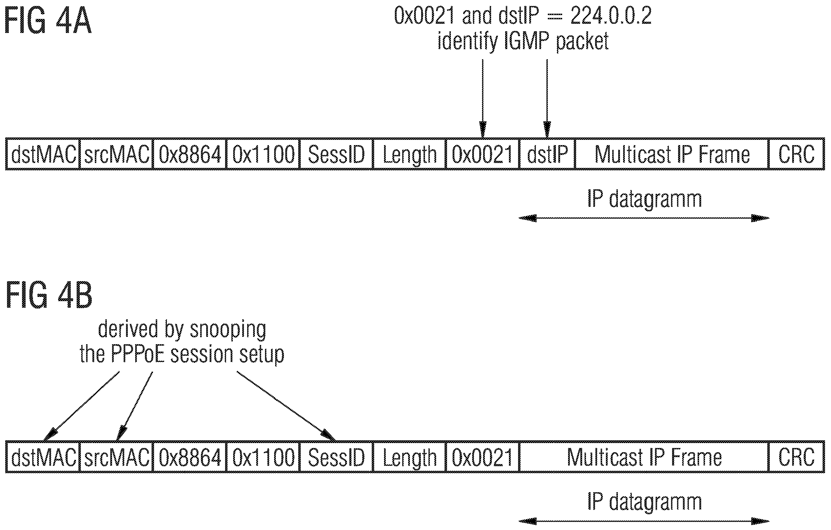

In FIG 4A ist beispielhaft ein PPPoE-Datenrahmen mit eingebettetem IGMP-Datenpaket dargestellt, wobei die Identifizierung der IGMP-Datenpakete im Rahmen von IGMP-Snooping anhand der Identifizierungs-ID 0x0021 und der Ziel-IP-Adresse (hier 224.0.0.2) möglich ist.

FIG 4B zeigt das im Rahmen von IGMP-Snooping mögliche Ableiten von weiteren Informationen welche für die Identifizierung des die Video-Informationen anfordernden Teilnehmers TLN (hier srcMAC), des Video-Servers (hier dstMAC) sowie der angeforderten Informationen (sessID) erforderlich sind.

Es kann der Fall eintreten, dass ein von einem Internetservice-Provider (ISP) verwalteter BRAS ausfällt. In diesem Fall kann keine PPPoE-Session ps2 zwischen der dezentralen Kommunikationseinrichtung DSLAM und dem BRAS eingerichtet werden. Dies kann nachteilige Auswirkungen auf einen TV-Broadcastservice haben, welcher beispielsweise von dem Betreiber eines Teilnehmerzugangsnetzes ACCESS bzw. einem Network-Access-Provider (NAP) angeboten wird. Ein NAP will selbstverständlich keine negative Servicebeeinflussung seitens des ISP akzeptieren. Dieses Problem kann jedoch durch die dezentralen Kommunikationseinrichtung DSLAM gelöst werden. Die dezentrale Kommunikationseinrichtung DSLAM muss nur in der Art und Weise konfiguriert werden, dass selbst für den Fall dass die PPPoE-Session ps2 zwischen der dezentralen Kommunikationseinrichtung und dem BRAS ausfällt, trotzdem eine PPPoE-Session ps1 zwischen dem Teilnehmer TLN und der dezentralen Kommunikationseinrichtung DSLAM eingerichtet wird. Dies kann beispielsweise dadurch erreicht werden, dass durch den Betreiber des Teilnehmerzugangsnetzes Dummy-IP-Adressen (beispielsweise eine ein privates Netzwerk deklarierende IP-Adresse) dem jeweiligen Teilnehmer TLN vorübergehend zugeordnet wird.

Manche Internet-Service-Provider bzw. ISP beschränken die Lebensdauer von zeitlich zugeteilten IP-Adressen auf beispielsweise 24 Stunden. Nach Ablauf dieser Lebensdauer wird die PPPoE-Session abgebaut, so dass durch die teilnehmerseitige Kommunikationseinrichtung CPE eine neue PPPoE-Session ps1 aufgebaut werden muss, welches die Zuteilung einer neuen öffentlichen dynamischen IP-Adresse erforderlich macht. Als Folge dieser Neuzuteilung dieser IP-Adresse wird parallel über die PPPoE-Session ps1 laufende TV-Broadcast-Service des Network-Access-Providers NAP für beispielsweise einige Sekunden unterbrochen. Dieses Problem kann vorteilhaft dadurch umgangen werden, dass durch die jeweilige dezentrale Kommunikationseinrichtung DSLAM die PPPoE-Session ps1 zum Teilnehmer zu einem Zeitpunkt abgebaut wird, wenn aktuell keine Multimedia-Daten bzw. TV-Broadcast-Service über die PPPoE-Session ps1 überittelt werden. Auf diese Weise kann ein Abbruch beispielsweise einer wichtigen TV-Show vermieden wird.

Im Rahmen des erfindungsgemäßen Verfahrens werden bidirektionale PPPoE-Sessions und Multicast- bzw. Broadcast-Datenverkehr zusammengefasst und über eine einzelne PPPoE-Session zum jeweiligen Teilnehmer übermittelt. Der erfindungsgemäße Ansatz des "Man-in-the-middle", d.h. das beidseitige Terminieren der PPPoE-Session in der dezentralen Kommunikationseinheit ist transparent für die am Austausch der Informationen beteiligten Kommunikationseinrichtungen (z.B. Set-Top-Box, Personalcomputer sowie Videoserver, TV-Server und Netzzugangseinheit BRAS. Durch die Transparenz ist eine Änderung von festgelegten Protokollabläufen nicht erforderlich wodurch der technische und somit auch wirtschaftliche Aufwand zur Durchführung des erfindungsgemäßen Verfahrens gering gehalten werden kann.

## Patentansprüche

1. Verfahren zur Unterstützung von Multicast-Diensten und/oder Broadcast-Diensten, das in einer dezentralen Kommunikationseinrichtung (DSLAM) eines Kommunikationsnetz (ACCESS) realisiert ist, wobei die dezentrale Kommunikationseinrichtung (DSLAM) mit zumindest einer teilnehmerseitigen Kommunikationseinrichtung (CPE, STP, PC, IP), einer Netzzugangseinrichtung (BRAS) für ein übergeordnetes Kommunikationsnetz (OKN) und einem Multimedia-Server (VSERV), der Multimedia-Daten mittels Multicast bzw. Broadcast an die dezentrale Kommunikationseinrichtung (DSLAM) sendet, verbunden ist, und wobei das Verfahren in der dezentralen Kommunikationseinrichtung (DSLAM) folgenden Schritte aufweist:
- Empfangen einer Anforderung, von einer teilnehmerseitigen Kommunikationseinrichtung (CPE, STP, PC, IP), zum Herstellen einer PPPoE Sitzung zwischen der teilnehmerseitigen Kommunikationseinrichtung (CPE, STP, PC, IP) und der Netzzugangseinrichtung (BRAS),
- Abfangen der genannten Anforderung, Herstellen einer ersten PPPoE Sitzung zwischen der teilnehmerseitigen Kommunikationseinrichtung (CPE, STP, PC, IP) und der dezentralen Kommunikationseinrichtung (DSLAM) sowie Herstellen einer zweiten PPPoE Sitzung zwischen der dezentralen Kommunikationseinrichtung (DSLAM) und der Netzzugangseinrichtung (BRAS),
- Verbinden der genannten ersten und zweiten PPPoE Sitzung derart, dass die Terminierung der ersten und zweiten PPPoE Sitzung in der dezentralen Kommunikationseinrichtung (DSLAM) für die teilnehmerseitige Kommunikationseinrichtung (CPE) und den Netzzugangseinrichtung (BRAS) transparent ist,
- Auswerten der von der teilnehmerseitigen Kommunikationseinrichtung (CPE, STP, PC, IP) über die erste PPPoE Sitzung empfangenen Datenpakete auf das Enthalten von Steuerinformationen für die Zugangskontrolle sowie Auswahlinformationen, die von einem Teilnehmer der teilnehmerseitigen Kommunikationseinrichtung (CPE, STP, PC, IP) benutzt werden, um eine bestimmten Multicast-Dienst oder Broadcast-Dienst auszuwählen,
- Auswählen des genannten Multicast-Dienstes oder Broadcast-Dienstes aus dem von dem genannten Multimedia-Server (VSERV) empfangenen Multicast-Diensten und/oder Broadcast-Diensten gemäß den für den Teilnehmer entdeckten Steuerinformationen und Einfügen des Datenstroms (icast) des ausgewählten Dienstes in Richtung teilnehmerseitige Kommunikationseinrichtung (CPE, STP, PC, IP) über die erste PPPoE Sitzung.

2. Verfahren nach Anspruch 1,
**dadurch gekennzeichnet,**
**dass** das übergeordnete Kommunikationsnetz (OKN) gemäß dem Internet Protokoll ausgestaltet ist.

3. Verfahren einem der vorherigen Ansprüche,
**dadurch gekennzeichnet,**
**dass** die genannten Auswahlinformationen mit Hilfe des IGMP-Protokolls übermittelt werden.

4. Verfahren nach einem der vorherigen Ansprüche,
**dadurch gekennzeichnet,**
**dass** zumindest eine zusätzliche Kommunikationsbeziehung (psx) zwischen der teilnehmerseitigen Kommunikationseinrichtung (CPE) und einem daran angeschlossenen Kommunikationsendgerät (STB, PC, IP) eingerichtet ist.

5. Kommunikationseinrichtung (DSLAM) eines Kommunikationsnetz (ACCESS), die
mit zumindest einer teilnehmerseitigen Kommunikationseinrichtung (CPE, STP, PC, IP), einer Netzzugangseinrichtung (BRAS) für ein übergeordnetes Kommunikationsnetz (OKN) und einem Multimedia-Server (VSERV), der Multimedia-Daten mittels Multicast bzw. Broadcast an die Kommunikationseinrichtung (DSLAM) sendet, verbunden ist, und die
derart aus gestaltet ist, dass sie folgenden Verfahrensschritte durchführt:
- Empfangen einer Anforderung, von einer teilnehmerseitigen Kommunikationseinrichtung (CPE, STP, PC, IP), zum Herstellen einer PPPoE Sitzung zwischen der teilnehmerseitigen Kommunikationseinrichtung (CPE, STP, PC, IP) und der Netzzugangseinrichtung (BRAS),
- Abfangen der genannten Anforderung, Herstellen einer ersten PPPoE Sitzung zwischen der teilnehmerseitigen Kommunikationseinrichtung (CPE, STP, PC, IP) und der dezentralen Kommunikationseinrichtung (DSLAM) sowie Herstellen einer zweiten PPPoE Sitzung zwischen der dezentralen Kommunikationseinrichtung (DSLAM) und der Netzzugangseinrichtung (BRAS),
- Verbinden der genannten ersten und zweiten PPPoE Sitzung derart, dass die Terminierung der ersten und zweiten PPPoE Sitzung durch die dezentrale Kommunikationseinrichtung (DSLAM) für die teilnehmerseitige Kommunikationseinrichtung (CPE) und den Netzzugangseinrichtung (BRAS) transparent ist,
- Auswerten der von der teilnehmerseitigen Kommunikationseinrichtung (CPE, STP, PC, IP) über die erste PPPoE Sitzung empfangenen Datenpakete auf das Enthalten von Auswahlinformationen, die von einem Teilnehmer der teilnehmerseitigen Kommunikationseinrichtung (CPE, STP, PC, IP) benutzt werden, um eine bestimmten Multicast-Dienst oder Broadcast-Dienst auszuwählen,
- Auswählen des genannten Multicast-Dienstes oder Broadcast-Dienstes aus dem von dem genannten Multimedia-Server (VSERV) empfangenen Multicast-Diensten und/oder Broadcast-Diensten gemäß den für den Teilnehmer entdeckten Steuerinformationen und Einfügen des Datenstroms (icast) des ausgewählten Dienstes in Richtung teilnehmerseitige Kommunikationseinrichtung (CPE, STP, PC, IP) über die erste PPPoE Sitzung.

## Claims

1. Method for supporting multicast services and/or broadcast services, which is realised in a decentralised communication device (DSLAM) of a communication network (ACCESS), wherein the decentralised communication device (DSLAM) is connected to at least one subscriber-side communication device (CPE, STP, PC, IP), to a network access device (BRAS) for a higher-ranking communication network (OKN) and to a multimedia server (VSERV), which transmits multimedia data by means of multicast or broadcast to the decentralised communication device (DSLAM), and wherein the method in the decentralised communication device (DSLAM) has the following steps:
- receiving a request from a subscriber-side communication device (CPE, STP, PC, IP) for creating a PPPoE session between the subscriber-side communication device (CPE, STP, PC, IP) and the network access device (BRAS),
- intercepting said request, creating a first PPPoE session between the subscriber-side communication device (CPE, STP, PC, IP) and the decentralised communication device (DSLAM) and creating a second PPPoE session between the decentralised communication device (DSLAM) and the network access device (BRAS),
- connecting said first and second PPPoE session in such a manner that terminating the first and second PPPoE session in the decentralised communication device (DSLAM) is transparent for the subscriber-side communication device (CPE) and the network access device (BRAS),
- evaluating the data packets received by the subscriber-side communication device (CPE, STP, PC, IP) via the first PPPoE session with respect to containing control information for the access control and also selection information, which is used by a subscriber of the subscriber-side communication device (CPE, STP, PC, IP) in order to select a particular multicast service or broadcast service,
- selecting said multicast service or broadcast service from the multicast services and/or broadcast services received by said multimedia service (VSERV) in accordance with the control information discovered for the subscriber and inserting the data stream (icast) of the selected service in the direction of the subscriber-side communication device (CPE, STP, PC, IP) via the first PPPoE session.

2. Method according to claim 1,
**characterised in that**
the higher-ranking communication network (OKN) is embodied in accordance with the Internet Protocol.

3. Method one of the preceding claims,
**characterised in that**
said selection information is transmitted with the aid of the IGMP protocol.

4. Method according to one of the preceding claims,
**characterised in that**
at least one additional communication relationship (psx) is set up between the customer premises equipment (CPE) and a communication terminal (STB, PC, IP) connected to said equipment.

5. Communication device (DSLAM) of a communication network (ACCESS), which
is connected to at least one subscriber-side communication device (CPE, STP, PC, IP), to a network access device (BRAS) for a higher-ranking communication network (OKN) and to a multimedia server (VSERV), which transmits multimedia data by means of multicast or broadcast to the communication device (DSLAM), and which
is embodied such that it carries out the following method steps:
- receiving a request from a subscriber-side communication device (CPE, STP, PC, IP) for creating a PPPoE session between the subscriber-side communication device (CPE, STP, PC, IP) and the network access device (BRAS),
- intercepting said request, creating a first PPPoE session between the subscriber-side communication device (CPE, STP, PC, IP) and the decentralised communication device (DSLAM) and creating a second PPPoE session between the decentralised communication device (DSLAM) and the network access device (BRAS),
- connecting said first and second PPPoE session in such a manner that terminating the first and second PPPoE session in the decentralised communication device (DSLAM) is transparent for the subscriber-side communication device (CPE) and the network access device (BRAS),
- evaluating the data packets received by the subscriber-side communication device (CPE, STP, PC, IP) via the first PPPoE session with respect to containing selection information, which is used by a subscriber of the subscriber-side communication device (CPE, STP, PC, IP) in order to select a particular multicast service or broadcast service,
- selecting said multicast service or broadcast service from the multicast services and/or broadcast services received by said multimedia service (VSERV) in accordance with the control information discovered for the subscriber and inserting the data stream (icast) of the selected service in the direction of the subscriber-side communication device (CPE, STP, PC, IP) via the first PPPoE session.

## Revendications

1. Procédé de support de services de multidiffusion et/ou de services de diffusion, qui est mis en oeuvre dans un système de communication décentralisé (DSLAM) d'un réseau de communication (ACCESS), dans lequel le système de communication décentralisé (DSLAM) est relié à au moins un système de communication côté abonné (CPE, STP, PC, IP), un système d'accès au réseau (BRAS) pour un réseau de communication supérieur (OKN) et à un serveur multimédia (VSERV) qui envoie des données multimédia par multidiffusion ou diffusion au système de communication décentralisé (DSLAM), et dans lequel le procédé dans le système de communication décentralisé (DSLAM) comprend les étapes suivantes :
- réception d'une demande, provenant d'un système de communication côté abonné (CPE, STP, PC, IP), pour produire une session PPPoE entre le système de communication côté abonné (CPE, STP, PC, IP) et le dispositif d'accès au réseau (BRAS),
- interception de ladite demande, production d'une première session PPPoE entre le système de communication côté abonné (CPE, STP, PC, IP) et le système de communication décentralisé (DSLAM), et production d'une seconde session PPPoE entre le système de communication décentralisé (DSLAM) et le dispositif d'accès au réseau (BRAS),
- liaison de ladite première et ladite seconde session PPPoE, de telle sorte que la terminaison de la première et la seconde session PPPoE dans le système de communication décentralisé (DSLAM) pour le système de communication côté abonné et le dispositif d'accès au réseau (BRAS) est transparente,
- analyse des paquets de données reçus du système de communication côté abonné (CPE, STP, PC, IP) via la première session PPPoE quant au contenu d'informations de commande pour le contrôle d'accès ainsi que d'informations de sélection, qui ont été utilisées par un abonné du système de communication côté abonné (CPE, STP, PC, IP) pour sélectionner un service de multidiffusion ou de diffusion déterminé,
- sélection du dit service de multidiffusion ou de diffusion à partir des services de multidiffusion et/ou des services de diffusion reçus du dit serveur multimédia (VSERV) en fonction des informations de commande détectées pour l'abonné et insertion du flux de données (icast) du service sélectionné en direction du système de communication côté abonné (CTP, STP, PC, IP) via la première session PPPoE.

2. Procédé selon la revendication 1,
**caractérisé en ce que**
le réseau de communication supérieur (OKN) est configuré selon le protocole Internet.

3. Procédé selon l'une quelconque des revendications précédentes,
**caractérisé en ce que**
lesdites informations de sélection sont transmises au moyen du protocole IGMP.

4. Procédé selon l'une quelconque des revendications précédentes,
**caractérisé en ce**
**qu'**au moins une relation de communication supplémentaire (psx) est établie entre le système de communication côté abonné (CPE) et un terminal de communication (STB, PC, IP) y étant raccordé.

5. Système de communication (DSLAM) d'un réseau de communication (ACCESS), qui est relié à au moins un système de communication côté abonné (CPE, STP, PC, IP), un système d'accès au réseau (BRAS) pour un réseau de communication supérieur (OKN) et à un serveur multimédia (VSERV) qui envoie des données multimédia par multidiffusion ou diffusion au système de communication (DSLAM), et qui est conçu de manière à exécuter les opérations suivantes :
- réception d'une demande, provenant d'un système de communication côté abonné (CPE, STP, PC, IP), pour produire une session PPPoE entre le système de communication côté abonné (CPE, STP, PC, IP) et le dispositif d'accès au réseau (BRAS),
- interception de ladite demande, production d'une première session PPPoE entre le système de communication côté abonné (CPE, STP, PC, IP) et le système de communication décentralisé (DSLAM), et production d'une seconde session PPPoE entre le système de communication décentralisé (DSLAM) et le dispositif d'accès au réseau (BRAS),
- liaison de ladite première et ladite seconde session PPPoE, de telle sorte que la terminaison de la première et la seconde session PPPoE par le système de communication décentralisé (DSLAM) pour le système de communication côté abonné et le dispositif d'accès au réseau (BRAS) est transparente,
- analyse des paquets de données reçus du système de communication côté abonné (CPE, STP, PC, IP) via la première session PPPoE quant au contenu d'informations de sélection, qui ont été utilisées par un abonné du système de communication côté abonné (CPE, STP, PC, IP) pour sélectionner un service de multidiffusion ou de diffusion déterminé, et
- sélection du dit service de multidiffusion ou de diffusion à partir des services de multidiffusion et/ou des services de diffusion reçus du dit serveur multimédia (VSERV) en fonction des informations de commande détectées pour l'abonné et insertion du flux de données (icast) du service sélectionné en direction du système de communication côté abonné (CTP, STP, PC, IP) via la première session PPPoE.
